# EUROPEAN PATENT APPLICATION

(11) **EP 3 666 715 A1**
(43) Date of publication of application: **17.06.2020**
(21) Application number: 18212303.4
(22) Date of filing: 13.12.2018
(51) Int. Cl.: B66B 11/04, H02K 41/03

(54) **ELECTRIC LINEAR MOTOR AND ELEVATOR**

(71) Applicant: KONE Corporation, 00330 Helsinki (FI)
(72) Inventor: KORHONEN, Tuukka, 00330 HELSINKI (FI); RAASSINA, Pasi, 00330 HELSINKI (FI); SUUR-ASKOLA, Seppo, 00330 HELSINKI (FI)
(74) Representative: Berggren Oy, Helsinki & Oulu

(57) **Abstract**

An electric linear motor (100) and an elevator (200) are presented. The electric linear motor (100) comprises a stator beam (16) comprising at least two stators rails (17), a number of movers (20) configured to move with respect to the stator beam (16), wherein each mover (20) comprises at least two motor units (22) which are configured to be arranged next to the stator beam (16) such that each one of the motor units (22) faces one of the stator rails (17), and each one of the at least two motor units (22) comprises at least two independently controllable motor subunits (25A, 25B, 25C) arranged consecutively with respect to a longitudinal direction (201) of the motor unit (22), wherein each of said motor subunits (25A, 25B, 25C) comprises windings (40) for generating a magnetic field to form magnetic coupling between the motor subunit (25A, 25B, 25C) and the respective stator rail (17).

## Description

### FIELD OF THE INVENTION

The invention concerns in general the technical field of electric linear motors. The invention concerns especially, however, not exclusively, electric linear motors utilized in elevators.

### BACKGROUND

In some elevators an electric linear motor is utilized for moving the elevator car between landing floors. Electric linear motors are especially useful in elevators having very long elevator shafts, that is, so called high-rise elevators. A problem with the high-rise elevators is that the weight of the hoist rope becomes so high that the rope may not withstand its own weight, let alone the weight of the elevator car.

A typical electric linear motor is such that it has a long linear stator equipped with controllable electromagnetic components such as coils for generating magnetic field. The rotor, or "mover", typically comprises permanent magnets, magnetic fields of which, when being in electromagnetic engagement with the "traveling" magnetic field of the stator, causes the mover to move along the linear stator.

In some earlier attempts, the electric linear motors have been advantageously utilized in elevators as described hereinabove. In some solutions, the windings have been arranged to the linear stator which, especially in high-rise elevators, requires considerable amount of windings to be wound since the length of the linear stator can be from 50 meters up to hundreds of meters, for instance.

In an earlier attempted solution, an electric linear motor has permanent magnets and controllable electromagnetic components, such as windings, arranged to the mover which is mounted to the elevator car. The linear stator, in contrary, comprises ferromagnetic material and is shaped to have stator teeth. Thus, the teeth arranged sequentially to the linear stator form magnetic poles when being in electromagnetic engagement with the mover generating magnetic field via controllable windings and permanent magnets.

This arrangement is advantageous because the windings are arranged to the mover or movers instead of long linear stator or stators, thus saving winding material. A challenge with the earlier attempts is that although the mover, and thus the elevator car alongside with the mover, can be moved along the linear stator by known methods utilizing varying magnetic field generated by motor the motor current, the elevator typically needs additional windings for levitating the mover, that is, to maintain an air gap or air gaps between the mover and the stator. Another challenge is that the mover tends to tilt with respect to the linear stator, that is, to turn in clockwise or counter-clockwise direction. The tilting may be felt by passengers inside the elevator car as uncomfortable vibrations.

There is thus still a need to provide an electric linear motor facilitating the controlling of the levitation and the tilting of the mover with respect to the stator beam.

### SUMMARY

An objective of the present invention is to provide an electric linear motor and an elevator. Another objective of the present invention is that the electric linear motor facilitates controlling of the levitation and the tilting of the linear motor of the elevator.

The objectives of the invention are reached by an electric linear motor and an elevator as defined by the respective independent claims.

According to a first aspect, an electric linear motor is provided. The electric linear motor, such as a flux-switching permanent magnet (FSPM) motor, comprises a stator beam comprising at least two stators rails, preferably four stator rails, and a number of movers configured to move with respect to the stator beam. Each mover comprises at least two motor units which are configured to be arranged next to the stator beam such that each one of the motor units faces one of the stator rails and has an airgap between the motor unit and the respective stator rail at least during movement, such as movement of the mover with respect to the stator beam. Furthermore, each one of the at least two motor units comprises at least two, preferably three and most preferably four, independently controllable motor subunits arranged consecutively with respect to a longitudinal direction of the motor unit. Each of said motor subunits comprises windings for generating a magnetic field to form magnetic coupling between the motor subunit and the respective stator rail.

"Next to the stator beam" may mean that the at least two motor units may be configured to be arranged such that the longitudinal directions of the motor units and the stators are substantially parallel with respect to each other and that the distances between the motor units and the stators in perpendicular direction with respect to the longitudinal directions is arranged to be such that an electromagnetic engagement between the motor units and the stators can be established over said distances, that is, the distances represent air gaps.

The independent controllability of the motor subunits may be implemented in different ways. For example, each one of the motor subunits of one motor unit may comprise a winding or coil, or windings or coils, the current of which may be controlled independently with respect to the currents injected to windings or coils of the other motor subunits of said motor unit. According to one example, each coil of the motor, such as of the motor subunits, may be separate with respect to the other coils such that the current being injected to said coil does not affect or depend, or is affected by, any current injected to other coils of the motor. According to still another example, one motor subunit may comprise a plurality of windings or coils, such as two, into each one of which current may be injected, and controlled, separately or independently with respect to other windings or coils, that is, having different currents being injected into different windings or coils of one motor subunit. In general, different currents may relate to amplitude, frequency, waveform, phase, etc. of the currents.

In some embodiments, a cross-sectional shape of the stator beam may be a polygon, preferably a quadrangle, most preferably a square. In addition, corners of the stator beam may be rounded, such as having a square-shaped stator beam with the four corners being rounded.

In a preferable embodiment, the electric linear motor may be a three-phase electric linear motor, preferably comprising a three-phase winding in each motor subunit.

In some embodiments, the motor units of each mover may be arranged in a fixed manner with respect to each other. In some embodiments, wherein the mover may be arranged in two opposite sides of the stator beam, the fixed manner with respect to each other means that if the air gap on one side reduces, the air gap on the other side of the stator beam increases.

In various embodiments, each one of the motor units may comprise a plurality of motor teeth and each one of the stator rails comprises a plurality of stator teeth. In preferable embodiments, a distance between consecutive motor teeth may be constant along the motor unit. Furthermore, preferably, a distance between consecutive stator teeth may be constant along the stator. Optionally, alternatively or in addition, each one of the motor teeth may comprise one or two permanent magnets.

In various embodiments, a ratio of a number of the plurality of motor teeth with respect to a number of the plurality of stator teeth may be 6:7. Alternatively or in addition, a portion of the motor unit comprising the number of the plurality of motor teeth may be arranged to have a substantially same length as a portion of the stator rail comprising the number of the plurality of stator teeth with respect to the longitudinal direction.

In some embodiments, a motor subunit, or each one of the motor subunits, may preferably comprise six motor teeth and six coils, respectively. Such a motor subunit or motor subunits may then correspond functionally to seven stator teeth, such as these corresponding elements have substantially same length, for instance. It should be noted, however, while one motor subunit may be considered as an independent, maybe even separate, element from other subunits, said stator teeth may refer to any consecutive seven stator teeth in the stator rail.

In various embodiments, each motor unit may comprise permanent magnets, preferably at least one permanent in each motor subunit, most preferably each motor tooth comprises at least one or two permanent magnets.

In various embodiments, at least two motor units of each mover may, respectively, be configured to be arranged in opposite sides of the stator beam to face respective stator rails in the opposite sides of the stator beam.

According to a second aspect, an elevator is provided. The elevator comprises at least one electric linear motor according to the first aspect. The elevator further comprises at least one elevator car arranged to be moved in an elevator shaft by the at least one electric linear motor. A number of movers is arranged to the elevator car for moving the elevator car in the elevator shaft. Furthermore, the at least one elevator car comprises a number of electrical drives configured to control currents in the windings of motor subunits of said movers.

In some embodiments, the elevator may be configured to control tilting of the movers with respect to the stator beam by controlling currents in windings of at least two motor units of each of the movers by at least portion of the number of electrical drives.

Alternatively or in addition, the number of electrical drives may include a designated electrical drive for each motor subunit.

In some embodiments, the number of electrical drives may include an electrical drive configured to control currents in windings of at least two motor sub-units of the mover similarly, such as having substantially identical currents.

In some embodiments, the at least two motor subunits may be arranged in the opposite sides of the stator beam to face respective stator rails in the opposite sides of the stator beam.

In some embodiments, the number of movers may comprise a plurality of movers, wherein the elevator, such as being a multicar elevator, may comprise at least one additional elevator car arranged to be moved in the elevator shaft by a plurality of electric linear motors. Each one of the at least one additional elevator car may comprise a second number of electrical drives configured to control currents in the windings of the mover or movers arranged to the at least one additional elevator car. Furthermore, the elevator may be arranged such that the elevator car and the at least one additional elevator car are configured to be moved between at least two of the plurality of electric linear motors.

The present invention provides an electric linear motor and an elevator. The present invention provides advantages over known solutions such that the electric linear motor in accordance with the present invention provides more uniform normal force distribution within the motor for facilitating the control of tilting of the mover with respect to the stator beam. This provides improved safety in the elevators as the motor can be controlled such as to minimize the mover accidentally gripping to the stator beam which can be unpleasant and/or dangerous for the passengers.

Various other advantages will become clear to a skilled person based on the following detailed description.

The expression "a number of' may herein refer to any positive integer starting from one (1).

The expression "a plurality of' may refer to any positive integer starting from two (2), respectively.

The terms "first" and "second" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also un-recited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an elevator according to an embodiment of the present invention.
Figure 2 illustrates schematically an electric linear motor according to an embodiment of the present invention.
Figure 3 illustrates schematically a stator beam according to an embodiment of the present invention.
Figure 4 illustrates schematically an elevator according to an embodiment of the present invention.
Figure 5 illustrates schematically an electric linear motor according to an embodiment of the present invention.
Figure 6 illustrates schematically a motor subunit according to an embodiment of the present invention.
Figure 7 illustrates schematically an arrangement for controlling an electric linear motor according to an embodiment of the present invention.
Figures 8A and 8B illustrate schematically arrangements for controlling an electric linear motor according to an embodiment of the present invention.
Figures 9A-9E illustrate schematically arrangements for controlling an electric linear motor according to an embodiment of the present invention.

### DETAILED DESCRIPTION OF SOME EMBODIMENTS

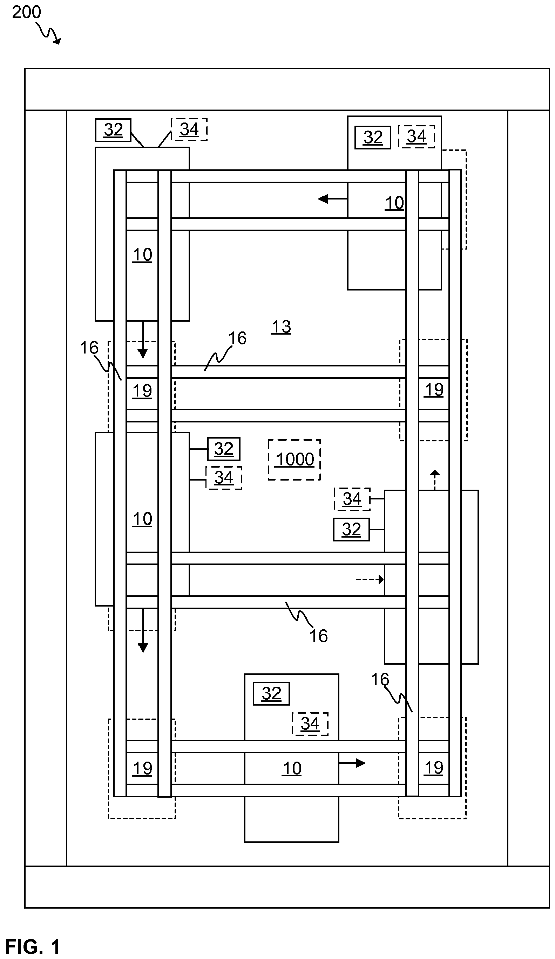

Figure 1 illustrates schematically an elevator 200 according to an embodiment of the present invention. The elevator 200 may comprise at least one or a plurality of elevator cars 10 moving in the elevator shaft 13 or the elevator car pathway 13.

According to various embodiments, the elevator car(s) 10 may comprise a number of electrical drives 32, such as comprising one or several frequency converters or inverters. Additionally, the elevator car(s) 10 may comprise a first energy storage 34, such as comprising a battery or batteries, which are shown with dashed lines indicating the optionality of the feature. The number of electrical drives 32 may be utilized for operating a mover (not shown in Fig. 1) arranged to the elevator car 10 for moving the car 10 within the elevator shaft 13. There may also be other electrically operated equipment in the elevator car 10 such as lighting, doors, user interface, emergency rescue equipment, etc. The number of electrical drives 32 or a further electrical drive unit, such as an inverter or a rectifier, may be utilized for operating one or several of said other equipment of the elevator car 10. The first energy storage 34 may, preferably, be electrically coupled to the number of electrical drives 32, for example, to an intermediate circuit of a frequency converter or converters, for providing electrical power to the number of electrical drives 32 and/or for storing electrical energy provided by the number of electrical drives 32 or other electrical power source.

There may preferably be at least two landing floors 210, having landing floor doors 19 or openings 19, comprised in the elevator 200. There may also be doors comprised in the elevator car 10. Although in Fig. 1 it is shown that there are two horizontally separated sets, or "columns", of vertically aligned landing floors, there could as well be only one column as in conventional elevators or more than two, for example, three.

The elevator car 10 may preferably be designed to serve the landing floors 210 during normal operation of the elevator 200. The moving of the elevator car 10 may normally be upwards or/and downwards. However, in embodiments utilizing an electric linear motor 100, the elevator car 10 may be arranged to be moved in horizontal directions or in any other directions, for example, inclined directions. This may be achieved by arranging a stator beam 16 or beams 16 of the electrical linear motor 100 to align relative to the desired direction.

Regarding the elevator shaft 13, the shaft 13 may be such as defining substantially closed volume in which the elevator car 10 or cars 10 are adapted and configured to be moved. The walls may be, for example, of concrete, metal or at least partly of glass, or any combination thereof. The elevator shaft 13 herein refers basically to any structure or pathway along which the elevator car 10 or cars 10 are configured to be moved.

As can be seen in Fig. 1 with respect to the elevator 200, the elevator car 10 or cars 10 may be moved within the elevator shaft 13 along a stator beam 16 or beams 16 vertically and/or horizontally depending on the direction of the stator beams 16. According to embodiments similar to one in Fig. 1 in this respect, the elevator car 10 or cars 10 may be configured to be moved along a number of vertical 16 and/or horizontal 16 stator beams, for example, two beams such as in Fig. 1. The stator beams 16 may be part of an electric linear motor of the elevator 100 utilized to move the elevator car 10 or cars 10 in the elevator shaft 13. The stator beams 16 may, preferably, be arranged in fixed manner, that is, stationary with respect to the elevator shaft 13, for example, to a wall of the shaft by fastening portions, which may be arranged to rotatable at direction changing positions of the elevator car 10, if any.

The elevator 100 may comprise an elevator control unit 1000 for controlling the operation of the elevator 100. The elevator control unit 1000 may be a separate device or may be comprised in the other components of the elevator 100 such as in or as a part of the electrical drive 32. The elevator control unit 1000 may also be implemented in a distributed manner so that, e.g., one portion of the elevator control unit 1000 may be comprised in the number of electrical drives 32 and another portion in the elevator car 10. The elevator control unit 1000 may also be arranged in distributed manner at more than two locations or in more than two devices.

The elevator control unit 1000 may comprise one or more processors, one or more memories being volatile or non-volatile for storing portions of computer program code and any data values and possibly one or more user interface units. The mentioned elements may be communicatively coupled to each other with e.g. an internal bus.

The processor may be configured to execute at least some portion of computer program code stored in the memory causing the processor, and thus the elevator control unit 1000, to perform desired tasks. The processor may thus be arranged to access the memory and retrieve and store any information therefrom and thereto. For sake of clarity, the processor herein refers to any unit suitable for processing information and control the operation of the elevator control unit 1000, among other tasks. The operations may also be implemented with a microcontroller solution with embedded software. Similarly, the memory is not limited to a certain type of memory only, but any memory type suitable for storing the described pieces of information may be applied in the context of the present invention.

An elevator 200 according to various embodiments of the present invention, for example as described hereinbefore, may comprise an electric linear motor 100 which comprises a stator beam 16 comprising at least two stators rails 17 or, preferably, four stator rails 17. The motor 100 may also comprise a number of movers 20 configured to move with respect to the stator beam 16, wherein each mover 20 may comprise at least two motor units 22 which are configured to be arranged next to the stator beam 16 such that each one of the motor units 22 faces one of the stator rails 17 and has an airgap 28 between the motor unit 22 and the respective stator rail 17 at least during movement, such as movement of the mover 20 with respect to the stator beam 16. Furthermore, each one of the at least two motor units 22 may comprise at least two, preferably three and most preferably four, independently controllable motor subunits 25A, 25B, 25C arranged consecutively with respect to a longitudinal direction of the motor unit 22. Each of said motor subunits 25A, 25B, 25C may comprise windings for generating a magnetic field to form magnetic coupling between the motor subunit 25A, 25B, 25C and the respective stator rail 17. However, the electric linear motor 100 as described above may be utilized also in applications other than an elevator.

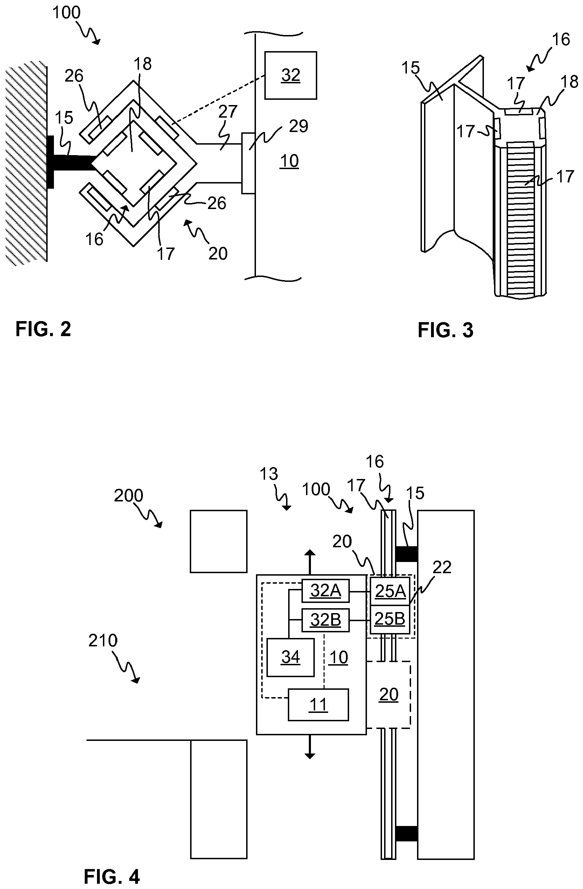

Figure 2 illustrates schematically an electric linear motor 100 according to an embodiment of the present invention. The electric linear motor 100 comprises a mover 20, preferably, a C-shaped or U-shaped (not shown). The mover 20 may comprise at least one unit of electromagnetic components 26 comprising at least one of winding and a permanent magnet or two magnets, and, preferably, magnetic core element(s) or ferromagnetic material. The unit 26 or units 26 of electromagnetic components may, preferably, be comprised in the mover 20 and adapted to face a stator rail 17 or stator rails 17 of the stator beam 16, as shown in Fig. 2, for instance.

The units of electromagnetic components 26 may be arranged to be in electromagnetic engagement with the stator rails 17 for moving the mover 20 along the stator beam 16. There may also be a support portion 27 by which mover 20 may be attached or coupled to the elevator car 10, for example, to the back wall of the car 10. As can be seen, the mover 20 may be shaped and designed in such a way as to enable the movement of the mover 20 along the stator beam 17 without interference from the fastening or support portions 15. There may, furthermore, be further support portions 29 utilized to attach the mover 20 to the elevator car 10. As can be seen in Fig. 2, in some embodiments the mover 20 may substantially, however, not completely, be arranged to surround the stator beam 16. Furthermore, the mover 20 may be arranged at least at two opposite sides of the stator beam 16 so that two motor units comprising the unit or units of electromagnetic components 26 may be arranged next to the stator beam 16 such that each one of the motor units faces one of the stator rails 17 and has an airgap 28 between the motor unit and the respective stator rail 17 at least during movement, for example, the movement of the mover 20 with respect to the stator beam 16.

The movement of the mover 20 along the stator beam 16 may be implemented by known control methods, such as, field-oriented or vector control or the like. The basic idea is to produce an alternating magnetic field, for example by the number of electrical drives 32, by injecting current to a unit of electromagnetic components 26 of the motor units of the mover 20, such as to a winding or coil thereof. The motor units facing the stator rails 17 then co-act with the stator rail 17 through the electromagnetic engagement and produces a force which moves the mover 20 and thus the elevator car 10 along the stator beam 16. However, permanent magnets may preferably be utilized in addition to the windings or coils, especially, for controlling the levitation of the mover 20 with respect to the stator beam 16.

It is known to a person skilled in the art to transform currents by calculation, such as utilizing an algorithm stored in a memory and executed on a computer or a processor, to transform currents from rotating frame of reference to a stationary frame of reference, and vice versa, by utilizing well-known Park and Clarke transformations. Furthermore, it is known to utilize the transformed current components, known as direct component (d-axis component) and quadrature component (q-axis component) for controlling the operation of electric motors.

According various embodiments of the present invention, the frame of reference may be fixed with respect to the coordinate system of the mover 20, therefore, rotating when the mover 20 moves along the stator beam 16. The q-axis component of the input current of the electric linear motor 100 may be utilized to move the mover 20 substantially in the direction along the stator beam 16. The direct (d-axis) component of the current may, advantageously, be utilized in controlling the air gap 28 between the mover 20 and the stator beam 16 and, therefore, the lateral position, such as levitation and/or tilting, of the mover 20 with respect to the stator beam 16 according to various embodiments of the present invention.

Figure 3 illustrates schematically a stator beam 16, or a part thereof, according to an embodiment of the present invention by a perspective view. The stator beam 16 may comprise at least one stator rail 17, preferably two stator rails 17, or most preferably four stator rails 17 extending substantially along the stator beam 16. There may, advantageously, be four stator rails 17 arranged at four sides of the stator beam 16. There may also be a fastening portion 15 or portions 15 by which the stator beam 16 may be attached in fixed manner to the structures, such as a wall, of the elevator shaft 13. The fastening portion 15 may also be a separate fastening portion 15 which may then be attached to the stator beam 16 for arranging the stator beam 16 into the elevator shaft 13 or may be an integrated part of the stator beam 16 or a part thereof. The stator rails 17 may, preferably, be of ferromagnetic material and comprise teeth on their outer surface. According to a preferable embodiment of the present invention, the stator beam 16 or beams 16 of the elevator 200 may be passive in the sense that they do not comprise controllable elements or components, such as coils. The stator beam 16 may further comprise a body part 18 which may be of metal, such as aluminium, or, for example, of fibre reinforced composite.

According to some embodiments of the present invention, a cross-sectional shape of the stator beam 16 may be a polygon, preferably a quadrangle, most preferably a square. According to an embodiment, the cross-sectional shape may be a parallelogram. In addition, one or several corners of the stator beam 16 may be rounded, such as having a polygon-shaped, a quadrangle-shaped, a square-shaped or parallelogram-shaped stator beam 16 with the at least one or, preferably, all corners being rounded.

Figure 4 illustrates schematically an elevator 200 according to an embodiment of the present invention. The elevator 200 may comprise a landing floor 210, preferably, a plurality of landing floors 210. Furthermore, the elevator 200 may comprise at least one elevator car 10, preferably a plurality of cars 10, arranged to be moved by an electric linear motor 100, such as in accordance with an embodiment of the present invention. At least one mover 20 of the electric linear motor 100 may be coupled to the elevator car 100. However, one elevator car 10 or each one of the cars 10 may comprise, for example, two movers 20 or four movers 20, such as being arranged in each corner at one side of the elevator car 10 or cars 10. In various embodiments, each one of the elevator cars 10 of the elevator 200 preferably comprises a controlling unit 11 which is configured to control at least the number of electrical drives 32, such as a first electrical drive 32A and a second electrical drive 32B, being at least functionally, preferably electrically, connected to the motor units 22, such as to the subunits 25A-25C thereof. However, the controlling unit 11 may also be arranged in distributed manner into the number of electrical drives 32.

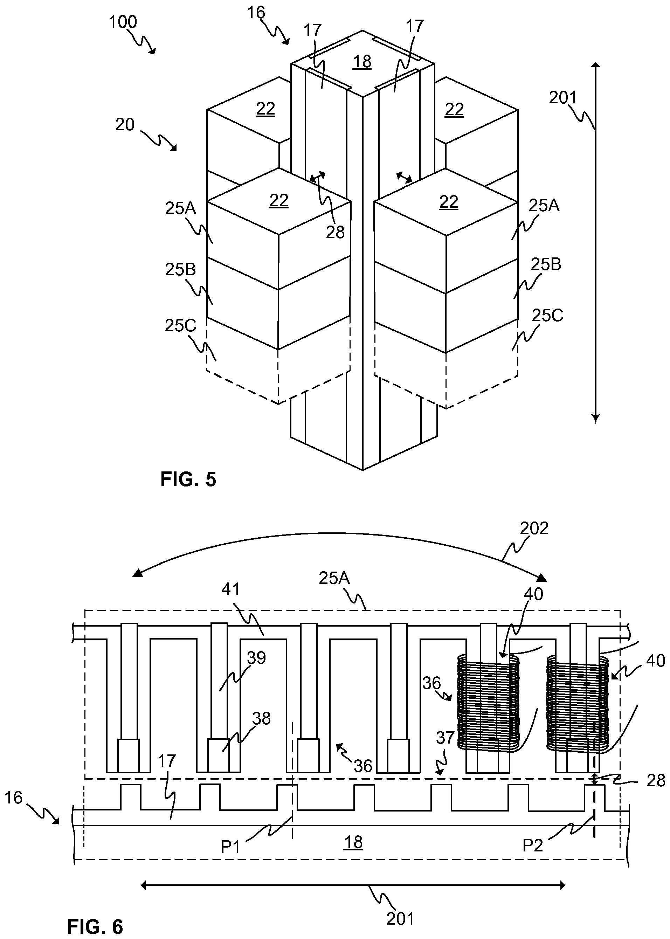

Figure 5 illustrates schematically an electric linear motor 100 according to an embodiment of the present invention. The electrical linear motor 100 in Fig. 5 comprises a stator beam 16 comprising four stator rails 17 extending substantially along the outer surface of the stator beam 16. In Fig. 5, the stator beam 16 has a square-shape, however, in some other embodiments the shape may be different. Optionally, the stator beam 16 may comprise a body part 18 which may be of different material than the stator rails 17. The stator rails 17 may be attached to the body part 18.

In Fig. 5, the mover 20 comprises four motor units 22. In some other embodiments, there may be only two motor units 22 preferably arranged in two opposite sides of the stator beam 16. The motor units 22 may, preferably, be fixed with respect to each other such that they are substantially unmovable relative to each other. The mover 20 may be configured such that an air gap 28 is arranged between the motor units 22 and the stator beam 16, preferably between the units of electromagnetic components 26 comprised in the motor units 22 and the respective stator rails 17, at least during the movement of the mover 20 with respect to the stator beam 16.

Furthermore, in Fig. 5, there are two, optionally three or four, motor subunits 25A-25C comprised in each of the motor units 22 of the mover 20. In various embodiments, the electric linear motor 100 may be a three-phase electric linear motor, preferably comprising a three-phase winding in each motor subunit 25A-25C. Each one of the at least two motor units 22 may comprises at least two, preferably three and most preferably four, independently controllable motor subunits 25A, 25B, 25C arranged consecutively with respect to a longitudinal direction 201 of the motor unit 22. Preferably, each of said motor subunits 25A, 25B, 25C may comprise windings 40, preferably three-phase windings, for generating a magnetic field to form magnetic coupling between the motor subunit 25A, 25B, 25C and the respective stator rail 17.

Figure 6 illustrates schematically a motor subunit 25A-25C according to an embodiment of the present invention. The motor subunit 25A in Fig. 6, that is a first motor subunit 25A, comprises a plurality of motor teeth 36 arranged consecutively in the longitudinal direction 201 of the stator beam 16. The stator beam 16, on the other hand, may comprise, in the stator rail 17, a plurality of stator teeth 37. Optionally, preferably, the stator beam 16 comprises a body part 18 to which the stator rail 17 or rails 17 may be attached.

As can be seen in Fig. 6, each motor tooth 36 may comprise at least one 39, preferably two 39, 38 permanent magnets arranged between core parts 41, such as of ferromagnetic material, of the motor subunits 25A-25C. Furthermore, each motor tooth 36 may comprise a winding 40 or a coil 40 arranged or wound around the tooth 36. The current of the winding 40 may be controlled in order to control the magnetic coupling between the motor unit 22, or specifically the motor subunit 25A-25C thereof, and the respective stator rail 17. The mover 20 may be configured to be arranged next to the stator beam 16 such that an air gap 28 is arranged between the motor teeth 36 and the stator teeth 37.

As can be seen in Fig. 6, there are positions in which motor 36 and stator 37 teeth substantially align with respect to each other. In Fig. 6, these positions have been marked with P1 and P2. At those positions, P1 and P2, a normal force distribution in the longitudinal direction 201 of the mover 20 has a maximum. When the mover 20 is being moved, the maximum normal force positions move to the opposite direction. In cases when one of the maximum normal force positions is close to an end of the motor subunit 25A-25C and another is almost at the middle, a resultant force, or torque, that causes tilting 202 of the motor subunit 25A-25C, and thus the motor unit 22, with respect to the stator beam 16. However, by utilizing an electric linear motor 100 according to an embodiment of the present invention, controlling of the tilting is facilitated.

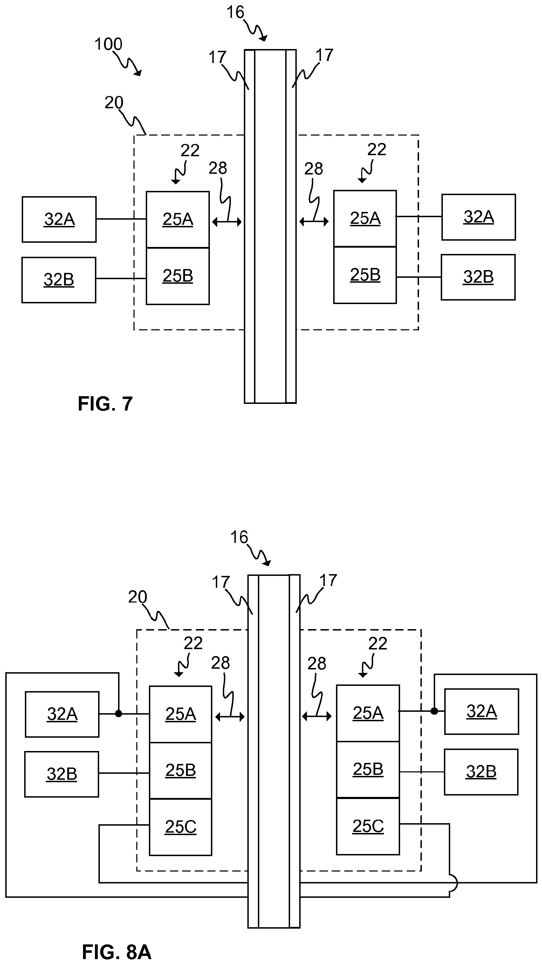

Figure 7 illustrates schematically an arrangement for controlling an electric linear motor 100 according to an embodiment of the present invention. The electric linear motor 100 may comprise at least one mover 20 comprising four motor units 22 configured to be arranged to face the stator rails 17 of the stator beam 16. The motor units 22 may preferably be fixed with respect to each other so that they are unmovable with respect to each other. The fixing may be implemented, according to various embodiments of the present invention, by attaching the motor units 22 to a common body portion or portions of the mover 20. Said fixing preferably means that when the air gap 28 on one side varies, for example reduces, the air gap 28 on the opposite side also varies, however, in opposite direction, that is, e.g., increases. Each motor unit 22 may comprise at least two motor subunits 25A-25C arranged consecutively in a longitudinal direction 201 of the mover 20 and/or stator beam 16. In Fig, 7, each of both of the motor subunits 25A, 25B is arranged to be controlled or operated by a designated electrical drive 32A, 32B. In Fig 7, there is shown two motor units 22 arranged at opposite sides of the stator beam 16, and thus total of four electrical drive 32A, 32B arranged to operate the motor subunits 25A, 25B thereof. The operating or controlling refers to controlling the current being injected into the windings 40 or coils in the motor units 22, such as described hereinbefore.

In various embodiments, the electric linear motor 100 may preferably comprise sensors, such as proximity sensor, for determining the width of the air gap 28. Furthermore, the width may advantageously be determined in a plurality of positions in the longitudinal direction of the stator beam 16. At least two sensors may be arranged such that at least one sensor is close to both ends of the motor unit 22 and/or motor subunit 25A-25C. However, in cases where the motor units 22 have been fixed with respect to each other, only one sensor may be arranged on opposite sides of the stator beam 16 and being displaced in the longitudinal direction 201 of the stator beam 16. Thus, these two sensors may be utilized to determine the amount of tilting of the mover 20 in the respective plane defined by said motor units 22 at opposite sides of the stator beam 16.

Furthermore, the sensors may preferably be connected to the controlling unit 11 such that the controlling unit 11 may, based on the measurements of the sensors, be configured to control the tilting, such as to provide substantially constant air gap 28 in the longitudinal direction of the stator beam 16. The sensors may be implemented in various embodiments of the present invention, such as described in connection with Figs. 8A-9E hereinbelow.

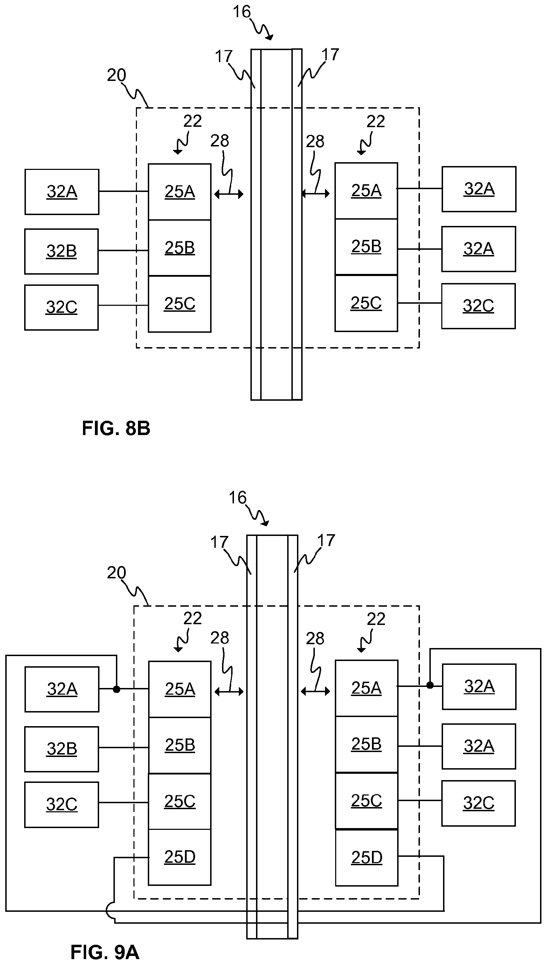

Figures 8A and 8B illustrate schematically arrangements for controlling an electric linear motor 100 according to an embodiment of the present invention. The electric linear motor 100 may comprise at least one mover 20 comprising four motor units 22 configured to be arranged to face the stator rails 17 of the stator beam 16. Each motor unit 22 may comprise at least three motor subunits 25A-25C arranged consecutively in a longitudinal direction 201 of the mover 20 and/or stator beam 16. In Fig, 8A, the first motor subunit 25A at one side of the stator beam 16 and the third motor subunit 25C on the opposite side are arranged to be controlled by the same electrical drive 32A. Furthermore, the first motor subunit 25A at the opposite side of the stator beam 16 and the third motor subunit 25C at the one side are arranged to be controlled by the same electrical drive 32A. Furthermore, the second motor subunits 25B at both sides may be arranged to be controlled by designated electrical drives 32B.

In Fig, 8B, each one of the at least three motor subunits 25A-25C is arranged to be controlled or operated by a designated electrical drive 32A-32C, respectively.

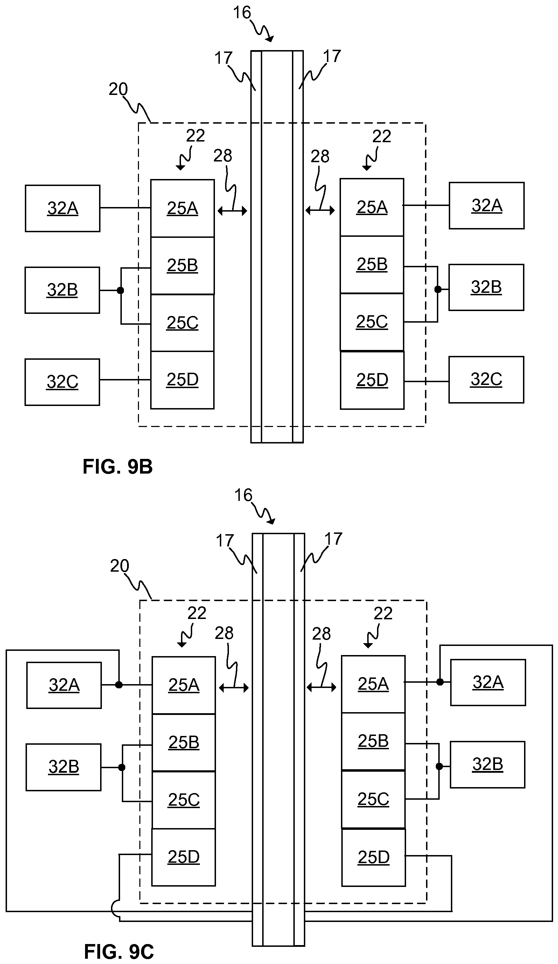

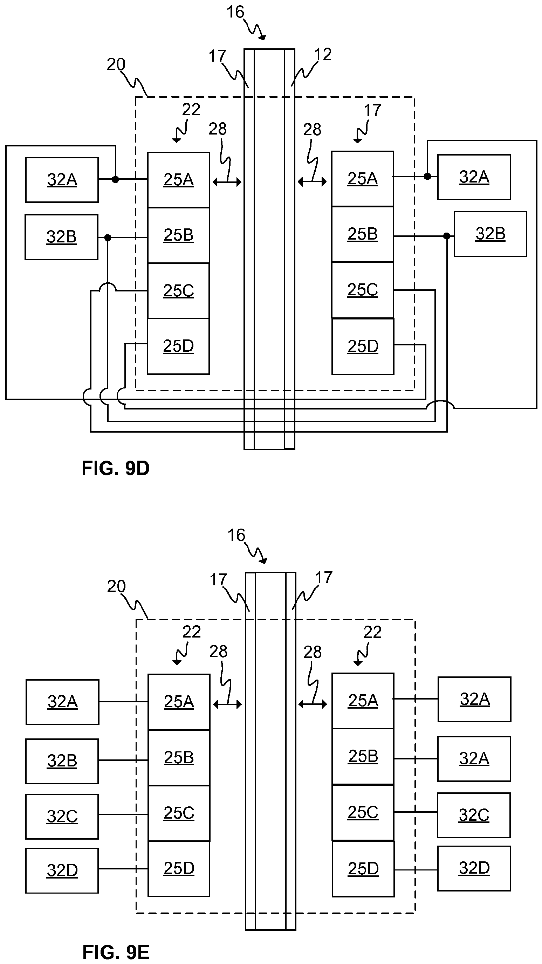

Figures 9A-9E illustrate schematically arrangements for controlling an electric linear motor 100 according to an embodiment of the present invention. The electric linear motor 100 may comprise at least one mover 20 comprising four motor units 22 configured to be arranged to face the stator rails 17 of the stator beam 16. Each motor unit 22 may comprise at least four motor subunits 25A-25C arranged consecutively in a longitudinal direction 201 of the mover 20 and/or stator beam 16.

In an embodiment, there may be a designated electrical drive 32A-32C for each winding or coil of the motor 100. For example, the current of each winding or coil of some or every motor subunit 25A-25C may be controlled by a designated electrical drive 32A-32C. However, it may also be possible to have certain electrical drives injecting and controlling currents of multiple windings or coils. In general, characteristics of currents to be controlled may relate to amplitude, frequency, waveform, phase, etc. of the currents.

In Fig, 9A, the first motor subunit 25A at one side of the stator beam 16 and the fourth motor subunit 25C on the opposite side are arranged to be controlled by the same electrical drive 32A. Furthermore, the first motor subunit 25A at the opposite side of the stator beam 16 and the fourth motor subunit 25C at the one side are arranged to be controlled by the same electrical drive 32A. Furthermore, the second and the third motor subunits 25B, 25C at both sides may be arranged to be controlled by designated electrical drives 32B, 32C, respectively.

In Fig, 9B, the first and the fourth 25A, 25D are arranged to be controlled or operated by designated electrical drives 32A, 32C, respectively. However, the second 25B and the third 25C motor subunits on the both sides, respectively, may be controlled by common electrical drives, in this case, second electrical drives 32B.

In Fig. 9C, the first motor subunit 25A at one side of the stator beam 16 and the fourth motor subunit 25C on the opposite side are arranged to be controlled by the same electrical drive 32A. Furthermore, the first motor subunit 25A at the opposite side of the stator beam 16 and the fourth motor subunit 25C at the one side are arranged to be controlled by the same electrical drive 32A. Furthermore, the second 25B and the third 25C motor subunits on both sides, respectively, may be controlled by common electrical drives, in this case, second electrical drives 32B.

In Fig, 9D, the first motor subunit 25A at one side of the stator beam 16 and the fourth motor subunit 25C on the opposite side are arranged to be controlled by the same electrical drive 32A. Furthermore, the first motor subunit 25A at the opposite side of the stator beam 16 and the fourth motor subunit 25C at the one side are arranged to be controlled by the same electrical drive 32A. Furthermore, the second motor subunit 25B at one side of the stator beam 16 and the third motor subunit 25C on the opposite side are arranged to be controlled by the same electrical drive 32B. Furthermore, the second motor subunit 25B at the opposite side of the stator beam 16 and the third motor subunit 25C at the one side are arranged to be controlled by the same electrical drive 32B.

Regarding the controlling of the motor subunits 25A-25D, they may be configured to be controlled such that the number of electrical drives 32, 32A-32D may be configured to control currents in windings 40 of the motor subunits 25A, 25B, 25C, 25D of the mover 20 similarly, such as having substantially identical currents in the windings 40, such as of a three-phase winding, of the motor subunit(s) controlled by one electrical drive 32A-32D.

In Fig, 9E, each one of the at least four motor subunits 25A-25D is arranged to be controlled or operated by a designated electrical drive 32A-32D, respectively.

The specific examples provided in the description given above should not be construed as limiting the applicability and/or the interpretation of the appended claims. Lists and groups of examples provided in the description given above are not exhaustive unless otherwise explicitly stated.

## Claims

1. An electric linear motor (100) comprising
- a stator beam (16) comprising at least two stators rails (17), preferably four stator rails (17),
- a number of movers (20) configured to move with respect to the stator beam (16) wherein each mover (20) comprises at least two motor units (22) which are configured to be arranged next to the stator beam (16) such that each one of the motor units (22) faces one of the stator rails (17) and has an airgap (28) between the motor unit (22) and the respective stator rail (17) at least during movement, and
- each one of the at least two motor units (22) comprises at least two, preferably three and most preferably four, independently controllable motor subunits (25A, 25B, 25C, 25D) arranged consecutively with respect to a longitudinal direction (201) of the motor unit (22), wherein each of said motor subunits (25A, 25B, 25C, 25D) comprises windings (40) for generating a magnetic field to form magnetic coupling between the motor subunit (25A, 25B, 25C) and the respective stator rail (17).

2. The electric linear motor according to claim 1, wherein a cross-sectional shape of the stator beam (16) is a polygon, preferably a quadrangle, most preferably a square.

3. The electric linear motor according to claim 1 or 2, wherein the electric linear motor (100) is a three-phase electric linear motor, preferably comprising a three-phase winding in each motor subunit (25A, 25B, 25C, 25D).

4. The electric linear motor according to any one of the preceding claims, wherein the motor units (22) of each mover (20) are arranged in a fixed manner with respect to each other.

5. The electric linear motor according to any one of the preceding claims, wherein each one of the motor units (22) comprises a plurality of motor teeth (36) and each one of the stator rails (17) comprises a plurality of stator teeth (37).

6. The electric linear motor according to claim 5, wherein a ratio of a number of the plurality of motor teeth (36) with respect to a number of the plurality of stator teeth (37) is 6:7.

7. The electric linear motor according to claim 5 or 6, wherein a portion of the motor unit (22) comprising the number of the plurality of motor teeth (36) is arranged to have a substantially same length as a portion of the stator rail (17) comprising the number of the plurality of stator teeth (37) with respect to the longitudinal direction (201).

8. The electric linear motor according to any one of the preceding claims, wherein each motor unit (22) comprises permanent magnets, preferably at least one permanent magnet (39) in each motor subunit (25A, 25B, 25C, 25D), most preferably each motor tooth (36) comprises at least one (39) or two (38) permanent magnets.

9. The electric linear motor according to any one of the preceding claims, wherein at least two motor units (22) of each mover (20) are, respectively, configured to be arranged in opposite sides of the stator beam (16) to face respective stator rails (17) in the opposite sides of the stator beam (16).

10. An elevator (200) comprising
- at least one electric linear motor (100) according to any one of claims 1-9, and
- at least one elevator car (50) arranged to be moved in an elevator shaft by the at least one electric linear motor (100), wherein a number of movers (20) is arranged to the elevator car (50) for moving the elevator car (50) in the elevator shaft, and wherein the at least one elevator car (50) comprises a number of electrical drives (32) configured to control currents in the windings (40) of motor subunits (25A, 25B, 25C, 25D) of said movers (20).

11. The elevator (200) according to claim 10, wherein the elevator (200) is configured to control tilting of the movers (20) with respect to the stator beam (16) by controlling currents in windings (40) of at least two motor units (22) of each of the movers (20) by at least portion of the number of electrical drives (32).

12. The elevator (200) according to claim 10 or 11, wherein the number of electrical drives (32) includes a designated electrical drive for each motor subunit (25A, 25B, 25C, 25D).

13. The elevator (200) according to claim 10 or 11, the number of electrical drives (32) includes an electrical drive configured to control currents in windings (40) of at least two motor subunits (25A, 25B, 25C, 25D) of the mover (20) similarly, such as having substantially identical currents.

14. The elevator (200) according to any one of claims 10-13, wherein the at least two motor subunits (25A-25C) are arranged in the opposite sides of the stator beam (16) to face respective stator rails (17) in the opposite sides of the stator beam (16).

15. The elevator (200) according to any one of claims 10-14, wherein the number of movers (20) comprises a plurality of movers (20), wherein the elevator (200), being a multicar elevator, comprises
- at least one additional elevator car (10) arranged to be moved in the elevator shaft (13) by a plurality of electric linear motors (100), wherein each one of the at least one additional elevator car (10) comprises a second number of electrical drives configured to control currents in the windings of the mover (20) or movers (20) arranged to the at least one additional elevator car (10), and wherein the elevator (200) is arranged such that the elevator car (10) and the at least one additional elevator car (10) are configured to be moved between at least two of the plurality of electric linear motors (100).
